# EUROPEAN PATENT SPECIFICATION

(11) **EP 3 875 917 B1**
(45) Date of publication and mention of the grant of the patent: **31.05.2023**
(21) Application number: 20160455.0
(22) Date of filing: 02.03.2020
(51) Int. Cl.: G01D 5/244

(54) **ROTARY ENCODER AND METHOD FOR DETERMINING MALFUNCTION OF A ROTARY ENCODER**
DREHGEBER UND VERFAHREN ZUR BESTIMMUNG EINER FEHLFUNKTION EINES DREHGEBERS
ENCODEUR ROTATIF ET PROCÉDÉ DE DÉTERMINATION DE DÉFAILLANCE D'UN ENCODEUR ROTATIF

(43) Date of publication of application: 08.09.2021
(73) Proprietor: LEINE & LINDE AB, 645 21 Strängnäs (SE)
(72) Inventor: GUSTAFSSON, Mats, 645 96 Stallarholmen (SE)
(74) Representative: Zacco Sweden AB

(56) References cited:
- DE-A1-102010 046 251
- DE-A1-102012 207 656
- DE-A1-102018 210 989
- US-B1- 6 630 659

## Description

### TECHNICAL FIELD

The present invention relates to a method for determining malfunction of a rotary encoder, the rotary encoder comprising a rotor, a stator and a shaft having a bearing configuration. The invention relates also to a computer program product comprising program code for a computer for implementing a method according to the invention. It relates also to a rotary encoder and an assembly equipped with the rotary encoder.

### BACKGROUND ART

Rotary encoders are used in industry for position and speed monitoring and are typically mounted on a shaft of a motor or a gearbox of an assembly. Rotary encoders may be equipped with a rotor unit and a stator unit for detecting operational parameters of the shaft of the assembly.

Rotary encoders are mounted on a rotary encoder shaft and various bearings may be used for proper operation. In case bearings of the rotary encoder are blocked or get sluggish a driving torque on the rotary encoder shaft is increased and may eventually lead to that a connection between the rotary encoder shaft and the shaft of the assembly will break.

US patent No. 6,630,659 discloses a position transducer comprising an encoder disc rigidly connected to a rotor of an electric motor rotatable about an axis, the encoder disc having an annular track for directly indicating an angular position of the encoder disc.

DE 10 2018 210989 discloses a measuring device for a spindle or for a rotary table with at least two first and second position sensors arranged to be rotatable about an axis of rotation.

DE 2010 046251 discloses a rotational position-measuring device for a rotor, comprising a magnetic sensor arranged opposite to an optical code-disk sensor and an evaluation unit for determining a displacement of the rotor.

DE 2012 207656 discloses a position-measuring device comprising a scanning unit that generates output signals, such that an angle or rotation associated with the relative movement between an item subjected to measurement and the scanning unit is determined.

### SUMMARY OF THE INVENTION

An object of the present disclosure is to provide a rotary encoder and a corresponding method, which seek to mitigate, alleviate, or eliminate one or more of the above-identified deficiencies in the art and disadvantages singly or in any combination.

An object of the present invention in claim 1 is to propose a novel and advantageous method for determining malfunction of a rotary encoder and thus providing a more reliable and safe operation of a rotary encoder.

Another object of the invention in claim 6 is to propose a novel and advantageous rotary encoder and a novel and advantageous computer program product in claim 12 for determining malfunction of a rotary encoder and for achieving an automated and user-friendly detection of malfunctioning bearings of a rotary encoder.

Advantageous embodiments are depicted in the dependent claims. Substantially the same advantages of method steps of the proposed method hold true for corresponding means of the proposed rotary encoder.

According to the invention, there is provided a method for determining malfunction of a rotary encoder, the rotary encoder comprising a rotor, a stator and a shaft having a bearing configuration, the method comprising the steps of:
- providing an axial bushing internally connected to the bearing configuration and rotatably arranged in a housing of the rotary encoder, the rotary encoder comprising a distancing arrangement being arranged to change an axial distance between the rotor and the stator;
- pre-stressing the bushing and the bearing configuration in a first axial direction by means of a spring member;
- displacing the bushing and the bearing configuration together with the rotor in a second axial direction, opposite to the first axial direction, by means of rotation of the bushing resulting from malfunction of the bearing configuration and by means of creating increased distance between the rotor and stator caused by of the distancing arrangement, which increased distance is sufficient to reduce detectability of angular positions of the shaft, as detected by the rotary encoder, to a level below a predetermined threshold.

The distancing arrangement may according to an example comprise a number of elongated members, such as pins, which are arranged in a respective recess during normal, non-malfunctioning, operation of the rotary encoder. Hereby, according to one example, the bushing comprises at least one recess each one being arranged to receive a pin. The distancing arrangement may be any suitable means being arranged to increase a distance between the rotor and the stator in a malfunctioning state of operation of the rotary encoder.

Herein angular positions of the shaft correspond to angular positions of the rotor.

The reduced detectability of angular positions of the rotor/shaft, as detected by the rotary encoder, may relate to amplitude values of measurements of angular positions of the rotor/shaft. According to one example it is determined that a decreased detectability relating to angular positions of the rotor/shaft is at hand if at least a number of amplitude values of measurements of angular positions are below a predetermined threshold level during a predetermined time interval.

The reduced detectability of angular positions of the rotor/shaft, as detected by the rotary encoder, may relate to a detection frequency of angular positions of the rotor/shaft. According to one example it is determined that a decreased detectability relating to angular positions of the rotor/shaft is at hand if detection frequency of angular positions is below a predetermined threshold level during a predetermined time interval. In such a case detection of angular positions of the rotor/shaft is not completely interrupted but a number of measurements during the predetermined time interval is not detected/registered accurately.

Thereby, safe and reliable operation of the rotary encoder is provided. Hereby operation of an associated assembly may be interrupted before severe damage or wear of components of the assembly and/or the rotary encoder occur. Hereby high standards of operation, involving a small number of unexpected disturbances, may be upheld.

The method may comprise the step of displacing the bushing and the bearing configuration together with the rotor in the second axial direction a distance adapted to a detection method of the rotary encoder. Examples of such detection methods may involve capacitive, optical, inductive and magnetic detection technologies. Hereby a versatile method is provided. By displacing the bushing and the bearing configuration together with the rotor in the second axial direction on the basis of a detection method of the rotary encoder a robust way of signal interruption is achieved. Furthermore, a gap between the rotor and stator hereby does not need to be greater than necessary, which advantageously may result in a compact design of the rotary encoder.

The method may comprise the step of generating an alarm signal when a reduced detectability of angular positions of the shaft, as detected by the rotary encoder, to a level below a predetermined threshold is at hand. Hereby an automated and user-friendly method is provided.

The method may comprise the step of automatically interrupting operation of an assembly connected to the rotary encoder when a reduced detectability of angular positions of the shaft, as detected by the rotary encoder, to a level below a predetermined threshold is at hand. Hereby an automated and user-friendly method is provided.

The method may comprise the step of generating an alarm signal when an interrupted detection of angular positions of the shaft/rotor, as detected by of the rotary encoder, is at hand. Hereby an operator of the rotary encoder may be informed about the interrupted detection and take adequate measures, such as interrupting operation of an assembly being arranged with the rotary encoder.

The method may comprise the step of automatically interrupting operation of an assembly connected to the rotary encoder when an interrupted detection of angular positions of the shaft/rotor, as detected by the rotary encoder, is at hand. Hereby a user-friendly method is provided.

Advantageously a controlled shut-down of the assembly may thus be achieved.

The method may comprise the step of providing more than one recess to the bushing, each one of the recesses being arranged to receive a respective pin. Hereby a more balanced operation of the rotary encoder is achieved. By providing a plurality of recesses holding a respective pin symmetrically at the bushing a reduced level of noise emissions is achieved. By providing a plurality of recesses holding a respective pin symmetrically at the bushing a reduced level vibrations during operation of the encoder is achieved.

According to the invention, there is provided a rotary encoder comprising means for detecting malfunction of the rotary encoder, the rotary encoder comprising a rotor, a stator and a shaft having a bearing configuration, the rotary encoder further comprising:
- an axial bushing internally connected to the bearing configuration and rotatably arranged in a housing of the rotary encoder;
- spring means being arranged for pre-stressing the bushing and the bearing configuration in a first axial direction;
- a distancing arrangement being arranged to change an axial distance between the rotor the stator, wherein the bushing and the bearing configuration together with the rotor are arranged to be displaced in a second axial direction, opposite to the first axial direction, by means of rotation of the bushing resulting from malfunction of the bearing configuration and by means of creating increased distance between the rotor and stator, which increased distance is sufficient to reduce detectability of angular positions of the shaft, as detected by the rotary encoder, to a level below a predetermined threshold.

The rotary encoder may comprise means being arranged for displacing the bushing and the bearing configuration together with the rotor in the second axial direction a distance adapted to a detection method of the rotary encoder. The distancing arrangement may comprise at least one recess and respective pins, wherein the pins may be brought out of position from the recesses when the bearing configuration is malfunctioning.

The rotary encoder may comprise:
- means being arranged for generating an alarm signal when a reduced detectability of angular positions of the shaft, as detected by the rotary encoder, to a level below a predetermined threshold is at hand; and/or
- means being arranged for automatically interrupting operation of an assembly connected to the rotary encoder when a reduced detectability of angular positions of the shaft, as detected by the rotary encoder, to a level below a predetermined threshold is at hand.

The rotary encoder may comprise:
- means being arranged for generating an alarm signal when an interrupted detection of angular positions of the shaft/rotor, as detected by the rotary encoder, is at hand; and/or
- means being arranged for automatically interrupting operation of an assembly connected to the rotary encoder when an interrupted detection of angular positions of the shaft/rotor, as detected by the rotary encoder, is at hand.

The means being arranged for generating an alarm signal may comprise an electronic control unit (ECU). The means being arranged for automatically interrupting operation of the assembly may comprise an electronic control unit.

According to one example the rotary encoder may comprise more than one recess of the bushing, each one of the recesses being arranged to receive a respective pin. For example 3, 4 or 5 recesses may be provided, each being associated with a pin. The pins may be any for the purpose suitable elongated member. The pins may consist of any metal or metal alloy. The pins may at least partly consist of a plastic material or any suitable other material.

According to an aspect of the invention there is provided an assembly comprising a rotary encoder according to the disclosure. The assembly may be any device, system, installation, machine, platform, configuration wherein the rotary encoder is applicable. The assembly may comprise any one of an electric motor, combustion engine and transmission shaft configuration.

According to an aspect of the invention there is provided a computer program product comprising instructions which, when the program is executed by a computer, cause the computer to carry out any one of the steps of the method depicted herein.

According to an aspect of the invention there is provided a computer-readable storage medium comprising instructions which, when executed by a computer, cause the computer to carry out any one of the steps of the method depicted herein.

According to the invention there is provided a computer program product comprising instructions which, when the program is executed by an electronic control arrangement, cause the electronic control arrangement to carry out any one of the steps of the method depicted herein.

According to the invention there is provided a computer-readable storage medium comprising instructions which, when executed by an electronic control arrangement, cause the electronic control arrangement to carry out any one of the steps of the method depicted herein.

Further objects, advantages and novel features of the present invention will become apparent to one skilled in the art from the following details, and also by putting the invention into practice. Whereas the invention is described below, it should be noted that it is not confined to the specific details described. One skilled in the art having access to the teachings herein will recognise further applications, modifications and incorporations in other fields, which are within the scope of the appended claims and thus the invention.

### BRIEF DESCRIPTION OF THE DRAWINGS

For fuller understanding of embodiments of the present invention and its further objects and advantages, the detailed description set out below should be read in conjunction with the accompanying drawings, in which the same reference notations denote similar items in the various diagrams, and in which:
Figure 1 schematically illustrates an assembly according to an embodiment of the invention;
Figure 2 schematically illustrates a rotary encoder according to an embodiment of the invention;
Figure 3a schematically illustrates two different states of a rotary encoder according to an embodiment of the invention;
Figure 3b schematically illustrates two different states of a rotary encoder according to an embodiment of the invention;
Figure 4a is a schematic flowchart of a method according to an embodiment of the invention;
Figure 4b is a schematic flowchart of a method according to an embodiment of the invention; and
Figure 5 schematically illustrates a computer according to an embodiment of the invention.

### DETAILED DESCRIPTION

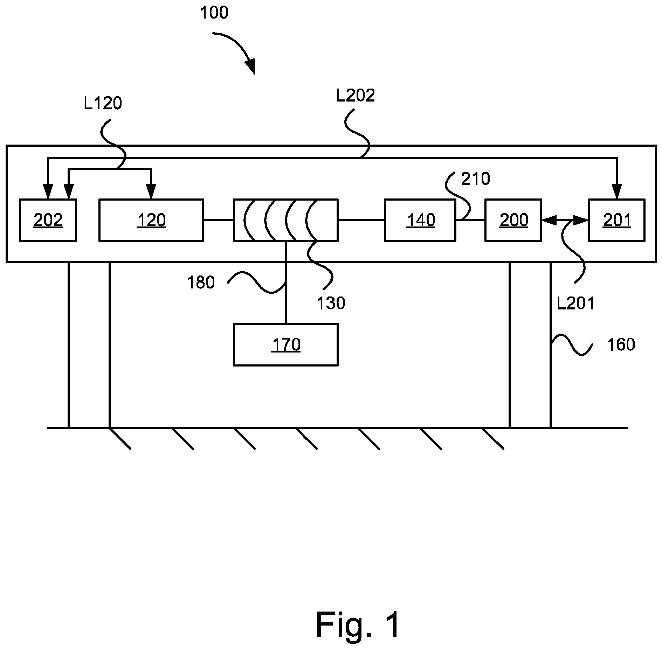

Figure 1 depicts a side view of an assembly 100. The exemplified assembly 100 is a crane for movement of various goods. The assembly 100 comprises a motor unit 120 being arranged to control operation of a cylinder unit 130 for holding a crane wire 180. The cylinder unit 130 may alternatively be denoted "drum". The crane wire 180 is adapted to detachably hold a load 170 at one end thereof. The crane may be provided with a number of support members 160. A first electronic control arrangement 201 is arranged for communication with a second electronic control arrangement 202 via a link L202. Alternatively, the first control arrangement 201 is arranged for communication directly with the motor unit 120. The second control arrangement 202 is arranged for communication with the motor unit 120 via a link L120. The first and/or second control arrangement may be arranged to control operation of the assembly 100, e.g. by controlling the motor unit 120. Hereby rotational/lateral movement of the cylinder unit 130 may be controlled and the load 170 may hereby be transported/positioned/moved, in vertical and lateral directions, according to operator commando signals. Alternatively, operation of the cylinder unit 130 may be performed automatically/autonomously by means of the second control arrangement 202.

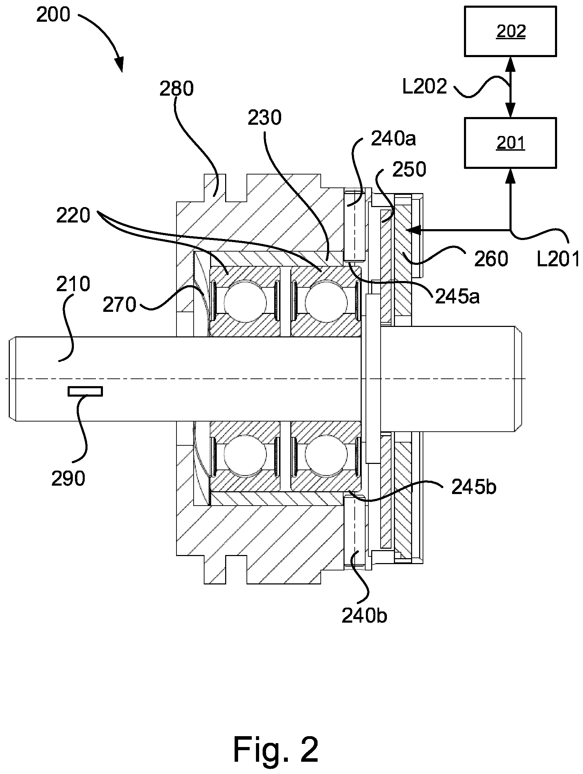

A shaft 210 of a rotary encoder 200 may be mechanically arranged via a clutch 140 to a shaft of the cylinder unit 130. The second control arrangement 202 may be arranged to control operation of the clutch 140. According to an example the shaft 210 of the rotary encoder 200 is mechanically arranged to the shaft of the cylinder unit 130 via a coupling means. The coupling means being arranged for connecting the shaft 210 of the rotary encoder 200 and an external shaft, such as the shaft of the cylinder unit 130, is depicted in greater detail with reference to Figure 2. The first control arrangement 201 is arranged for communication with the rotary encoder via a link L201. The rotary encoder 200 is arranged to determine operational parameters of the assembly 100. Said operational parameters may be e.g. cylinder unit shaft rotational speed and/or relative rotational positions of the cylinder unit shaft.

The method and the rotary encoder disclosed herein are applicable to paper mill systems and rolling mills. The method and the rotary encoder disclosed herein are applicable to elevator systems, oil rig systems and various machine tools. The rotary encoder may thus be applicable to a great variety of assemblies.

The proposed method and the proposed rotary encoder are applicable to various assemblies comprising an engine/motor for rotating a shaft. The assembly may be a vehicle such as a mining machine, tractor, dumper, wheel-loader, forest machine, earth mover, road construction vehicle, road planner, emergency vehicle or a tracked vehicle. The proposed method and the proposed rotary encoder are according to one aspect of the disclosure well suited to other applications that comprise a rotary shaft than vehicles, e.g. watercraft. The watercraft may be of any kind, e.g. motorboats, steamers, ferries, ships or submarines.

The method and the rotary encoder disclosed herein are applicable to various stationary assemblies/platforms comprising a rotating shaft, such as a windmill for generating electricity.

According to one example a number of rotary encoders 200 are provided to the assembly 100 for detecting operational parameters of various components/units/arrangements of the assembly 100. Said number of rotary encoders 200 may be 2, 3, 4, or larger.

The term "link" refers herein to a communication link which may be a physical connection such as a multicore cable, an opto-electronic communication line, or a non-physical connection such as a wireless connection, e.g. a radio link or microwave link.

The term "electronic control arrangement" is according to one embodiment herein defined as an arrangement comprising only one electronic control arrangement or a number of connected electronic control arrangements. Said one electronic control arrangement or said number of connected electronic control arrangements may be arranged to perform the steps according to the method depicted herein.

The terminology used herein is for the purpose of describing particular aspects of the disclosure only, and is not intended to limit the disclosure. As used herein, the singular forms "a", "an" and "the" are intended to include the plural forms as well, unless the context clearly indicates otherwise.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved. Also, the functions or steps noted in the blocks can according to some aspects of the disclosure be executed continuously in a loop.

It should be emphasized that the term "comprises/comprising" when used in this specification is taken to specify the presence of stated features, integers, steps, or components, but does not preclude the presence or addition of one or more other features, integers, steps, components, or groups thereof.

It should further be noted that any reference signs do not limit the scope of the claims, that the example embodiments may be implemented at least in part by means of both hardware and software, and that several "arrangements", "means", "units" or "devices" may be represented by the same item of hardware.

Figure 2 schematically illustrates a rotary encoder 200 according to an embodiment of the invention. The rotary encoder 200 comprises a shaft 210. The shaft 210 is configured to be attached to a rotating device of an assembly, such as the assembly 100 depicted in greater detail with reference to Figure 1. The rotary encoder is arranged to determine values of a set of operational parameters of the shaft 210. The operational parameters may be characteristics of operation of the assembly 100. According to one example the set of operational parameters may comprise the parameter "prevailing angular position of the shaft 210". According to one example the set of operational parameters may comprise any of the parameters: prevailing angular position of the shaft 210 and rotational speed of the shaft 210.

According to one example the shaft 210 may be connectable to a rotating device of the assembly by means of a recess 290. This allows a connection in a rotatable fixed manner. Alternatively the shaft 210 may be connectable to a rotating device of the assembly by means of any suitable fastening means. According to one example a connection between the shaft 210 and a rotating device of the assembly is performed via a shaft coupling device. According to one example a connection between the shaft 210 and a rotating device of the assembly is performed via a clutch. This allows a releasable connection. The connection between the shaft 210 and the rotating device of the assembly allows movement of a package comprising the bearing configuration 220, the bushing 230, the shaft 210 and the rotor 250.

A bearing configuration 220 is fixedly arranged to the shaft 210. The bearing configuration 220 may comprise any suitable bearings. According to this embodiment the bearing configuration 220 comprises a set of two rolling-element bearings. Advantageously at least two rolling-element bearings are provided for achieving a balanced and low-vibration operation of the rotary encoder 200.

An axial bushing 230 is internally connected to the bearing configuration 220. The bearing configuration 220 is fixedly arranged to the interior of the bushing 230. The bushing 230 is rotatably arranged in a housing 280 of the rotary encoder 200. Hereby an outer surface of the bushing 230 is not fixedly secured to the housing 280. The axial bushing 230 may provide a cylindrical form. The bushing 230 may consist of any suitable material, such as a metal or alloy, e.g. copper or stainless steel. The housing 280 may consist of any suitable material, such as a metal, alloy or plastic material.

A spring member 270 is arranged to pre-stress a package comprising the bushing 230, the bearing configuration 220, the shaft 210 and the rotor 250 in a direction towards the stator 260. This direction is referred to as a first axial direction. The spring member 270 may be any suitable spring element. According to one embodiment the spring member is a wave spring. The wave spring may comprise a coiled flat wire with waves. The wave spring may be a single turn wave spring. The wave spring may be a multi turn wave spring. The spring member 270 may according to one example be a coil spring. According to one embodiment the spring member 270 comprises a number of spring elements being arranged to pre-stress the package comprising the bearing configuration 220 and the bushing 230 in the first axial direction of the shaft 210.

The bushing 230 comprises at least one recess. According to one example embodiment the bushing 230 comprises a first recess 245a and a second recess 245b. According to one example the first recess 245a and the second recess 245b are arranged diametrically opposite to each other. This advantageously provides a more balanced operation of the rotary encoder 200. Any suitable number of recesses may be provided to the bushing 230. Preferably the recesses are evenly distributed at the bushing 230. Each recess of the bushing 230 is provided at a first end of the bushing 230 facing the rotor 250. The bushing 230 has a second end facing the spring member 270. Each recess provides a profile having an extension in an axial direction of the bushing 230. Each recess provides a profile having an extension in a circumferential direction of the bushing 230.

Each one of the provided recesses of the bushing 230 is arranged to receive a respective pin. Alternatively any suitable structure, such as a screw, elongated member, protrusion, may be arranged for forcing the bushing 230 when the bushing rotates towards the spring member 270. According to this example the first recess 245a is arranged to receive a first pin 240a and the second recess 245a is arranged to receive a second pin 240b. The first pin 240a and the second pin 240b are arranged in such a way that they cause an axial movement of the bushing 230 and the bearing configuration 220 when they leave the respective recess when the bushing 230 is forced into rotation due to malfunction of the bearing configuration 220. The first pin 240a and the second pin 240b are hereby in contact with respective portions of the housing 280. Hereby the pins are arranged to push/move a package comprising the bearing configuration 220 and the bushing in an axial direction towards the spring member 270. Hereby a displacement between the rotor 250 and stator 260 is achieved, which displacement according to one example is sufficient for interrupting detection of angular positions of the shaft 210/rotor 250 provided by the rotary encoder 200. Hereby a displacement between the rotor 250 and stator 260 is achieved, which displacement according to one example is sufficient for reducing detectability of angular positions of the shaft 210/rotor 250 provided by the rotary encoder 200 to a level below a predetermined threshold.

The profiles of the recesses and the respective pins are designed according to a method of detection of the rotary encoder 200, e.g. optical detection method or inductive detection method. Hereby a displacement of the bushing 230 and the bearing configuration 220 together with the rotor 250 and the shaft 210 is predetermined and adapted to the detection method of the rotary encoder. A required displacement for signal interruption between the rotor 250 and the stator 260 of the rotary encoder 200 may be empirically determined.

The rotary encoder 200 works by being configured to detect relative rotation of the rotor 250 and the stator 260. The rotation of the rotor 250 with respect to the stator 260 may be detected using any technology capable of detecting such changes. Examples of such technologies include capacitive, optical, inductive and magnetic detection. The rotary encoder 200 may be configured as an incremental and/or an absolute rotary encoder. The terms rotor and stator may refer to single components as well as aggregates serving a common function of rotor or stator.

The rotor 250 further comprises a first disc having a scale for detection of relative rotation between the rotor 250 and the stator 260. The first disc is mounted at the shaft 210. When the shaft 210 rotates with respect to the stator 260, rotation measurement circuitry at the stator 260 can detect changes in the scale with respect to the rotation measurement circuitry. For instance, the scale may comprise inductive, capacitive and/or magnetic elements configured to cause a corresponding inductive, capacitive or magnetic signal when the first disc is rotated with respect to the stator 260. The scale may be part of an optical rotary encoder wherein the rotary encoder is configured to shine a light onto a photodiode through slits in the first disc. Alternatively, a reflective version of an optical rotation measurement technology for an optical rotary encoder may be used. Alternatively, any suitable components being arranged for detecting operational parameters may be used in the rotary encoder 200. The components are chosen on the basis of the operation parameter detection method of the rotary encoder 200.

The stator 260 comprises a second disc. The second disc comprises measurement apparatus configured to detect relative motion of the first and second discs, e.g. by detecting said inductive, capacitive or magnetic signals. The second disc may be a printed circuit board.

According to one example the stator 260 is not disc-shaped and may be denoted "scanner" or "scanning unit".

A first control arrangement 201 is arranged for communication with the rotary encoder 200 via a link L201. According to one embodiment the first control arrangement 201 is arranged for communication with the rotation measurement circuitry at the stator 260 via the link L201. Hereby the stator 260 is arranged to send signals comprising information about operational parameters to the first control arrangement 201 via the link L201.

The first control arrangement 201 is arranged to determine values of the operational parameters. The first control arrangement 201 is arranged for presenting determined values of the operational parameters via any suitable presentation means (not shown) to an operator of the assembly 100 and/or the rotary encoder 200. The first control arrangement 201 is arranged to determine if detection of operational parameters is interrupted. According to one example the control arrangement 201 is arranged to determine if detection of operational parameters is interrupted due to a displacement between the rotor 250 and the stator 260 caused by malfunctioning of the bearing configuration 220.

According to an embodiment the first control arrangement 201 is arranged to generate an alarm signal when an interrupted detection of angular positions of the shaft 210/rotor 250, as detected by the rotary encoder 200, is at hand. Hereby the first control arrangement 201 is arranged to provide the alarm signal to any means, such as the presentation means, being arranged to indicate malfunctioning of the bearing configuration 220 to an operator.

According to an embodiment the first control arrangement 201 is arranged to automatically interrupt operation of the assembly 100 connected to rotary encoder 200 when an interrupted detection of angular positions of the shaft 210/rotor 250, as detected by the rotary encoder 200, is at hand.

An operator of the assembly 100 and/or the rotary encoder 200 may, where applicable, re-start operation of the assembly 100 manually. This may be performed by means of the first control arrangement 201 and/or the second control arrangement 202 via a suitable user-interface.

According to one example a re-start operation of the assembly 100 may, where applicable, be performed automatically. Hereby a hold circuit may be provided to e.g. the rotation measurement circuitry at the stator 260.

According to one example detection of operational parameters are automatically resumed after signal interruption where applicable.

A second control arrangement 202 is arranged for communication with the first control arrangement 201 via a link L202. It may be releasably connected to the first control arrangement 201. It may be a control arrangement external to the assembly 100. It may be adapted to performing the steps according to embodiments of the disclosure herein. It may be used to cross-load software to the first control arrangement 201, particularly software for applying the method according to the disclosure herein. It may alternatively be arranged for communication with the first control arrangement 201 via an internal network of the assembly 100. It may be adapted to performing functions corresponding to those of the first control arrangement 201, such as generating an alarm signal when an interrupted detection of angular positions of the shaft 210/rotor 250, as detected by the rotary encoder 200, is at hand, and/or when a detectability of angular positions of the shaft 210/rotor 250, as detected by the rotary encoder (100), is reduced to a level below a predetermined threshold. The second control arrangement 202 may be arranged for operating the assembly 100. For example the second control arrangement 202 may be arranged to control operation of the motor 120 and the clutch 140 of the assembly 100.

According to one example the rotary encoder 200 is arranged to be connected to an assembly 100 for detecting operational parameters thereof. According to one example a set comprising the rotary encoder 200 and the first control arrangement 201 is arranged to be connected to an assembly comprising the second control arrangement 202, wherein the second control arrangement 202 is a control arrangement being external to the rotary encoder 200. The set comprising the rotary encoder 200 and the first control arrangement 201 may thus according to one example be arranged for being "plugged-in" to an assembly 100 where operational parameters are to be detected for various purposes.

According to one embodiment the rotation measurement circuitry at the stator 260 may be arranged to perform the same functions as the first control arrangement 201 and the second control arrangement 202. Method steps being disclosed herein may thus be performed by any of the rotation measurement circuitry at the stator 260, the first control arrangement 201 and the second control arrangement 202.

A connection member 290 is arranged at the shaft 210. The connection member 290 may be integrally formed with the shaft 210. According to one embodiment the connection member 290 is one or more recesses. This is schematically illustrated in Figure 2. According to another example the connection member is formed as one or more protrusions. The connection member 290 is arranged for fixing the shaft 210 to a shaft of an assembly 100. In other words, the connection member 290 is configured to fixedly secure the shaft 210 to a shaft being external to the rotary encoder 200.

According to one version holding means of the shaft external to the rotary encoder 200 may be arranged for interacting with the at least one recess of the shaft 210 so as to achieve a fixedly secured connection between the two shafts. According to another version holding means of the shaft external to the rotary encoder 200 may be arranged for interacting with the at least one protrusion of the shaft 210 so as to achieve a fixedly secured connection between the two shafts. The means for connecting the external shaft and the shaft 210 may be referred to as coupling means.

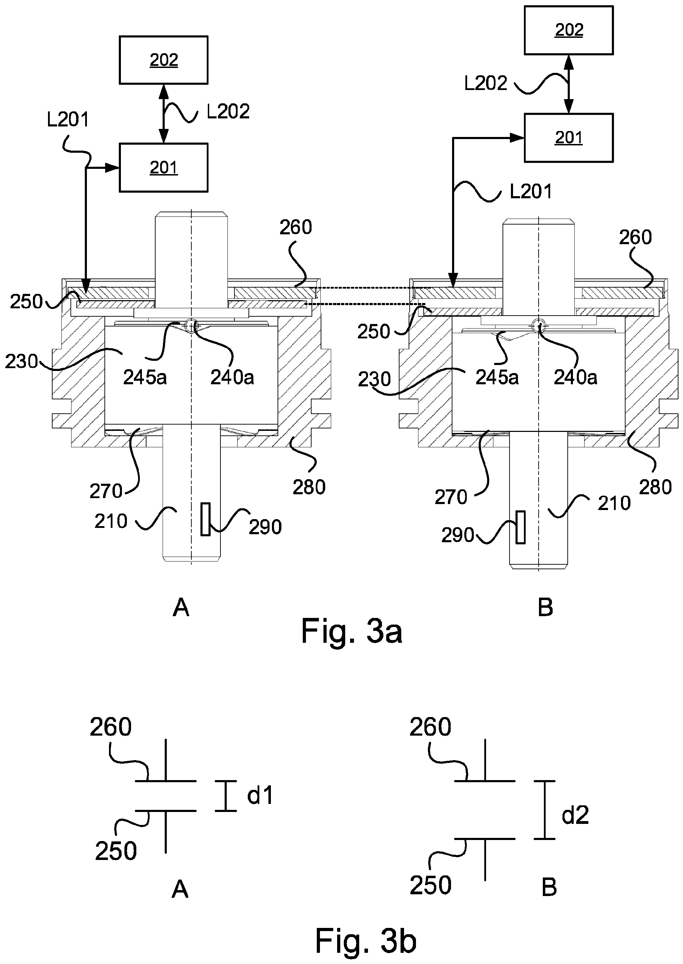

It should be noted that a package comprising the bearing configuration 220, the bushing 230, the shaft 210 and the rotor 250 is arranged to be displaced in the second axial direction. The package is arranged to be moved such that a distance between the rotor 250 and the stator 260 is increased from a first distance d1 to a second distance d2 (see Fig. 3b). Hereby the connection member 290 and/or the external shaft are arranged to allow such movement of the package.

According to one example a smooth shaft 210 is used and the shafts are connected by means of clamps. According to one example the shaft 210 is a hollow shaft for allowing reception of an external shaft.

According to one example any suitable locking device may be provided for fixedly securing the shaft 210 to the shaft being external to the rotary encoder 200.

The connection member 290 may be configured to releasably secure the shaft 210 to the shaft being external to the rotary encoder 200.

The rotary encoder 200 may further be configured for electromagnetic compatibility scenarios. The housing 280 of the rotary encoder 200 may be arranged to fixate and protect fragile EMC components from vibrations. According to some aspects, the rotary encoder 200 further comprises electrostatic discharge, ESD, shielding arranged to shield the rotary encoder 200 from electrostatic charge and/or discharge. According to some aspects, the rotary encoder 200 further comprises electromagnetic shielding arranged to prevent electromagnetic radiation to and/or from the rotary encoder 200 exceeding a predetermined threshold. According to some aspects, the rotary encoder 200 is configured to function without degradation in the presence of a predetermined electromagnetic disturbance. In other words, according to some aspects, the rotary encoder 200 is configured to be electromagnetically immune to a predetermined radio frequency interference.

According to some aspects, the rotary encoder 200 further may comprise a set of sealing components arranged at the rotary encoder 200. The set of sealing components is arranged to seal the rotary encoder 200 from an environment.

According to some aspects, the rotary encoder 200 comprises a set of sealing components. The set of sealing components is arranged to seal the rotary encoder 200 from an environment.

According to some aspects, the rotary encoder 200 comprises a set of spacers. The set of spacers is configured to fix a relative position between two or more components of the rotary encoder 200.

It should be noted that many different versions of the distancing arrangement may be implemented. The distancing arrangement may according to one example provide an inverted structure, compared to what is depicted above, wherein the recesses as depicted with reference to Figure 2 and Figure 3a are replaced with protrusions and the pins are replaced with a counterpart with a recess. According to this example the bushing 230 is provided with a number of protrusions and the housing is provided with corresponding recesses, each one of the recesses are arranged to receive a respective protrusion. The function of such a design is similar to the function of the design as depicted with reference to Figure 2 and Figure 3a, namely that the bushing 230 and the bearing configuration 220 together with the rotor 250 are displaced in the second axial direction by means of rotation of the bushing 230 resulting from malfunction of the bearing configuration 220 and by means of creating increased distance between the rotor 250 and stator 260 caused by the distancing arrangement. The increased distance between the rotor 250 and the stator 260 is sufficient to reduce detectability of angular positions of the shaft 210/rotor 250, as detected by the rotary encoder 200, to a level below a predetermined threshold.

According to one example the distancing arrangement may comprise a number of recesses being provided on an outer surface of the bearing configuration 220, each recess being arranged to receive a protrusion of the housing 280. According to another example the distancing arrangement may comprise a number of protrusions being provided on an outer surface of the bearing configuration 220, each protrusion being arranged in a respective recess of the housing 280.

Figure 3a schematically illustrates two different states of a rotary encoder 200. The rotary encoder 200 is illustrated in a cross-sectional view. According to this embodiment two recesses (245a, 245b) are provided in the bushing 230. However, only one recess 245a is illustrated. The recess 245b and a corresponding pin 240b are not illustrated. A first state A of the rotary encoder is illustrated to the left. A second state B of the rotary encoder is illustrated to the right.

The first state A refers to a normal state of operation of the rotary encoder 200. Herein a distance between the rotor 250 and the stator 260 is sufficient for normal/desired/accurate detection of operational parameters of the shaft 210. Examples of such operational parameters may be relative rotational position of the shaft 210 and angular speed of the shaft 210. The distance between the rotor 250 and the stator 260 may be an optimal distance for accurate and reliable detection of operational parameters of the shaft 210.

As illustrated with reference to the rotary encoder being in the first state A the spring member 270 is arranged to pre-stress the bushing 230 and the bearing configuration 220 in a first axial direction of the shaft 210, i.e. towards the stator 260. The pin 240a is provided in the recess 245a. The pin 240b is provided in the recess 245b.

The second state B refers to a state of operation of the rotary encoder 200 where malfunctioning of the bearing configuration 220 is at hand. Hereby a driving torque of the bearing configuration 220 has been increased to certain level due to that the bearing configuration 220 is blocked or has become sluggish. Herein a distance between the rotor 250 and the stator 260 has been increased, compared to the distance according to the first operational state A, to such an extent that detection of operational parameters of the shaft 210 is interrupted. The displacement between the rotor 250 and the stator 260 is hereby not small enough for accurate and reliable detection of operational parameters of the shaft 210.

As illustrated with reference to the rotary encoder 200 being in the second state B the spring member 270 is in a compressed state caused by movement of the bushing 230 and the bearing configuration 220 in the second axial direction of the shaft 210, i.e. away from the stator 260. The pins 240a and 240b are not provided in the recess 245a and 245b, respectively, but are affecting the bushing 230, bearing configuration 220 and the rotor 250 to move in the second axial direction, whereby the second operational state B is achieved. A generated force by the dislocation of the pins is hereby over winning a force of the spring member 270. As the pins leave the respective recess an increased distance between the rotor 250 and stator 260 is achieved. The pins are hereby forced to leave the respective recess by means of rotation of the bushing 230 due to malfunction of the bearing configuration 220. This new, increased, distance between the rotor 250 and the stator 260 is sufficient for interrupting detection of operational parameters of the rotor 250 and the stator 260.

The form/profile of the at least one recess of the bushing 230 may be any suitable form/profile. The dimensions of the at least one recess of the bushing 230 may be any suitable dimensions. According to one example the recesses of the bushing 230 are presenting a V-shape. According to one example the recesses of the bushing are presenting a U-shape. According to one example the recesses of the bushing 230 are presenting a concave shape.

The form/profile of the pins of the rotary encoder 200 may be any suitable form/profile. The dimensions of the pins of the rotary encoder 200 may be any suitable dimensions. According to one example the pins of the rotary encoder 200 are presenting a circular cross-section area. According to one example the pins of the rotary encoder 200 are presenting an elliptical cross-section area.

It should be noted that the form/profile and the dimensions of the recesses of the bushing 230 as well as the form/profile and the dimensions of the corresponding pins are chosen so as to cause an interruption of the detection of operational parameters by means of the rotor 250 and the stator 260 when the bearing configuration 220 is malfunctioning. The malfunctioning of the bearing configuration 220 may be related to bearing blockage or that the bearing configuration 220 by any reason get sluggish.

Figure 3b schematically illustrates distances between the rotor 250 and the stator 260 in the first operational state A and the second operational state B.

In the first operational state A the rotor 250 and the stator 260 are separated by a distance d1. The distance d1 is a predetermined distance, which allows proper detection of operational parameters of the shaft 210.

In the second operational state B the rotor 250 and the stator 260 are separated by a distance d2. The distance d2 is a predetermined distance, which does not allow proper detection of operational parameters of the shaft 210. In the second operational state B reduced detectability of angular positions of the shaft 210/rotor 250 to a level below a predetermined threshold is at hand. In the second operational state B completely interrupted detection of angular positions of the shaft 210/rotor 250 may be at hand.

The distance d2 is greater than the distance d1.

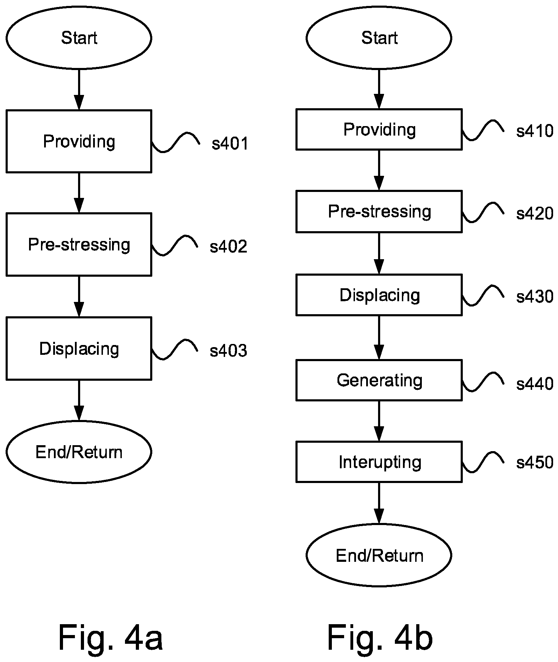

Figure 4a schematically illustrates a flow chart of a method for determining malfunction of a rotary encoder 200, the rotary encoder 200 comprising a rotor 250, a stator 260 and a shaft 210 having a bearing configuration 220, according to an example of the present invention. A method step s401 comprises the step of providing an axial bushing 230 internally connected to the bearing configuration 220 and rotatably arranged in a housing 280 of the rotary encoder, the rotary encoder comprising a distancing arrangement being arranged to change an axial distance between the rotor 250 and the stator 260.

A method step s402 comprises the step of pre-stressing the bushing 230 and the bearing configuration 220 in a first axial direction by means of a spring member 270.

A method step s403 comprises the step of displacing the bushing 230 and the bearing configuration 220 together with the rotor 250 in a second axial direction, opposite to the first axial direction, by means of rotation of the bushing 230 resulting from malfunction of the bearing configuration 220 and by means of creating increased distance between the rotor 250 and stator 260 caused by the distancing arrangement, which increased distance is sufficient to reduce detectability of angular positions of the shaft 210, as detected by the rotary encoder 100, to a level below a predetermined threshold.

The detectability may relate to amplitudes of measured angular position signals. The predetermined threshold may be any suitable threshold, e.g. 90%, 80% or 50% of average amplitude of measured angular position signals of a certain predetermined time interval. The predetermined time interval may be any suitable time interval, e.g. 1 second, or 5 seconds. The predetermined time interval may be less than 1 second. The predetermined time interval may be larger than 5 seconds.

The detectability may relate to frequency of actually detected angular positions during a predetermined time interval. The predetermined threshold may be any suitable threshold, e.g. 90%, 80% or 50% of detection frequency of normal/correct detection frequency during a predetermined time interval. The predetermined time interval may be any suitable time interval, e.g. 1 second, or 5 seconds. The predetermined time interval may be less than 1 second. The predetermined time interval may be larger than 5 seconds.

After the method step s403 the method ends/is returned.

Figure 4b schematically illustrates a flow chart of a method for determining malfunction of a rotary encoder 200, the rotary encoder 200 comprising a rotor 250, a stator 260 and a shaft 210 having a bearing configuration 220.

The method comprises a method step s410. The method step s410 comprises the step of providing an axial bushing 230 internally connected to the bearing configuration 220 and rotatably arranged in a housing 280 of the rotary encoder 200, the bushing 230 comprising at least one recess each one being arranged to receive a respective pin. The at least one recess is formed to have a depth in an axial direction of the bushing 230. Hereby the at least one recess is arranged to receive a respective pin in an orthogonal direction of the axial direction of the bushing 230. The step s410 may comprise the step of providing more than one recesses to the bushing 230, each one of the recesses being arranged to receive a respective pin. After the method step s410 a subsequent method step s420 may be performed.

The method step s420 may comprise the step of pre-stressing the bushing 230 and the bearing configuration 220 in a first axial direction by means of a spring member 270. The acting force of the spring member 270 may be chosen on the basis of characteristics of the rotary encoder 200, such as design parameters of the recesses and the respective pins.

After the method step s420 a subsequent method step s430 may be performed.

The method step s430 may comprise the step of displacing the bushing 230 and the bearing configuration 220 together with the rotor 250 in a second axial direction, opposite to the first axial direction, by means of rotation of the bushing 230 due to malfunction of the bearing configuration 220 such that the pins leave the respective recess and thus causing a displacement between the rotor 250 and stator 260 sufficient to interrupt detection of angular positions of the shaft 210 provided by the rotary encoder 200. Hereby a reliable interruption of the detection provided by the rotary encoder 200. Rotation of the bushing is introduced in a mechanical manner when the bearing configuration 220 is malfunctioning. An increased displacement between the rotor 250 and the stator 260 is introduced at an early stage of malfunction which may reduce implications. The method step s430 may comprise the step of displacing the bushing 230 and the bearing configuration 220 together with the rotor 250 in the second axial direction a distance adapted to a detection method of the rotary encoder 200. By designing the recesses and the respective pins an adequate interruption of the detection of operational parameters is provided. After the method step s430 a subsequent method step s440 may be performed.

The method step s440 may comprise the step of generating an alarm signal when an interrupted detection of the rotary encoder 200 is at hand. Hereby an operator at an early stage may be informed about that the bearing configuration 220 is malfunctioning. Hereby the operator may manually interrupt operation of the encoder 200 and/or operation of the assembly 100, e.g. by controlling the engine 120 to stop or by controlling a clutch 140 of the assembly 100 to disengage and reduce provided torque from the engine 120. After the method step s440 a subsequent method step s450 may be performed.

The method step s450 may comprise the step of automatically interrupting operation of an assembly 100 connected to the rotary encoder 200. This may be performed by means of the first control arrangement 201, the second control arrangement 202 or the rotation measurement circuitry of the stator 260. Hereby a control arrangement may be arranged to automatically control the engine 120 to stop or to control a clutch 140 of the assembly 100 to disengage and reduce provided torque from the engine 120. According to one example a brake unit of the assembly is operated so as to reduce rotation velocity of the shaft of the assembly 100 and/or the shaft 210 of the rotary encoder. This may be performed by means of the first control arrangement 201, the second control arrangement 202 or the rotation measurement circuitry of the stator 260.

According to one example interrupted operation of the assembly 100 connected to the rotary encoder 200 is performed by switching the power off, thus shutting down the assembly at least partly. This may be performed by means of the first control arrangement 201, the second control arrangement 202 or the rotation measurement circuitry of the stator 260.

After the method step s450 the method ends.

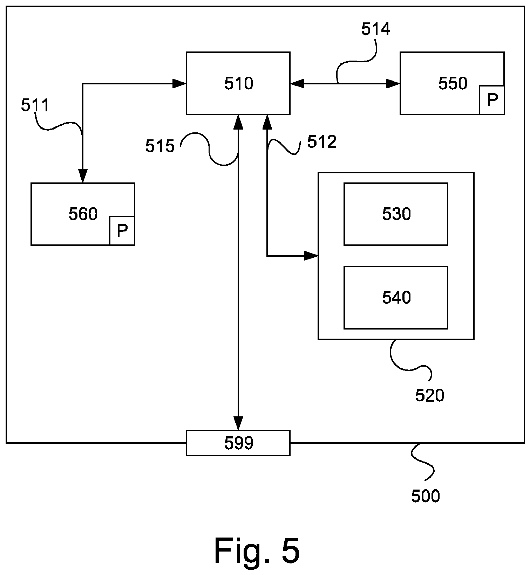

Figure 5 is a diagram of one version of a device 500. The control arrangements 201 and 202 described with reference to Figure 2 and Figure 3a may in one version comprise the device 500. According to one example the rotation measurement circuitry of the stator 260 may comprise the device 500. The device 500 comprises a non-volatile memory 520, a data processing unit 510 and a read/write memory 550. The non-volatile memory 520 has a first memory element 530 in which a computer program, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

According to an example embodiment there is provided a computer program comprising routines for determining malfunction of a rotary encoder 200, the rotary encoder comprising a rotor 250, a stator 260 and a shaft 210 having a bearing configuration 220.

The computer program P may comprise routines for detecting reduced detectability of angular positions of the shaft 210, as detected by the rotary encoder 100, to a level below a predetermined threshold.

The computer program P may comprise routines for detecting an interruption of detection of angular positions of the shaft 210, provided by the rotary encoder 200, due to an increased distance between the rotor 250 and the stator 260 caused by malfunction of the bearing configuration 220.

The computer program P may comprise routines for generating an alarm signal when a reduced detectability of angular positions of the shaft 210, as detected by the rotary encoder 100, to a level below a predetermined threshold, is at hand.

The computer program P may comprise routines for automatically interrupting operation of an assembly 100 connected to the rotary encoder 200 when a reduced detectability of angular positions of the shaft 210, as detected by the rotary encoder 100, to a level below a predetermined threshold, is at hand.

The computer program P may comprise routines for generating an alarm signal when an interrupted detection of angular positions of the shaft 210, provided by the rotary encoder 200, is at hand. The computer program P may comprise routines for automatically interrupting operation of an assembly 100 connected to rotary encoder 200 when an interrupted detection of angular positions of the shaft 210, provided by the rotary encoder 200, is at hand.

The computer program P may comprise routines for performing any one of the process steps detailed with reference to the disclosure.

The program P may be stored in an executable form or in compressed form in a memory 560 and/or in a read/write memory 550.

Where it is stated that the data processing unit 510 performs a certain function, it means that it conducts a certain part of the program which is stored in the memory 560 or a certain part of the program which is stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit via a data bus 511. The read/write memory 550 is arranged to communicate with the data processing unit 510 via a data bus 514. The links L201, L202 and L120, for example, may be connected to the data port 599 (see Fig. 1, Fig. 2 and Fig. 3a).

When data are received on the data port 599, they are stored in the second memory element 540. When input data received have been stored, the data processing unit 510 will be prepared to conduct code execution as described above.

Parts of the methods herein described may be conducted by the device 500 by means of the data processing unit 510 which runs the program stored in the memory 560 or the read/write memory 550. When the device 500 runs the program, method steps and process steps herein described are executed.

The relevant method steps depicted herein may be performed by means of e.g. the device 500. Any suitable processing circuitry may be used for performing the disclosed method steps.

The processing circuitry may be arranged in the rotary encoder 200 or externally of the rotary encoder 200, such as at the assembly 100.

The computer program product comprises a computer readable medium such as, for example a universal serial bus (USB) memory, a plug-in card, an embedded drive or a read only memory (ROM). The computer readable medium has stored thereon a computer program comprising program instructions. The computer program is loadable into the processing circuitry comprised in any of the first control arrangement 201, second control arrangement 202 or the rotation measurement circuitry of the stator 260. When loaded into the processing circuitry, the computer program may be stored in a memory associated with or comprised in the processing circuitry and executed by a processor. According to some embodiments, the computer program may, when loaded into and run by the processing circuitry, cause execution of method steps according to, for example, the methods illustrated in Figure 4a and 4b or otherwise described herein.

According to one embodiment, there is provided a computer program product comprising instructions which, when the program is executed by a computer, e.g. the first control arrangement 201 and/or the second control arrangement 202, cause the computer to carry out the step of detecting a reduced detectability of angular positions of the shaft 210, as detected by a rotary encoder 200, to a level below a predetermined threshold due to an increased distance between a rotor 250 and stator 260 caused by malfunction of the bearing configuration 220.

According to one embodiment, there is provided a computer-readable storage medium comprising instructions which, when executed by a computer, e.g. the first control arrangement 201 and/or the second control arrangement 202, cause the computer to carry out the step of detecting a reduced detectability of angular positions of a shaft 210, as detected by a rotary encoder 200, to a level below a predetermined threshold due to an increased distance between a rotor 250 and stator 260 caused by malfunction of a bearing configuration 220. The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

## Claims

1. A method for determining malfunction of a rotary encoder (200) caused by malfunction of its bearing configuration, the rotary encoder (200) comprising a rotor (250), a stator (260) and a shaft (210) having a bearing configuration (220), the method comprising the steps of:
- providing (s401) an axial bushing (230) internally connected to the bearing configuration (220) and rotatably arranged in a housing (280) of the rotary encoder, the rotary encoder (200) comprising a distancing arrangement being arranged to change an axial distance between the rotor (250) and the stator (260);
- pre-stressing (s402) the bushing (230) and the bearing configuration (220) in a first axial direction by means of a spring member (270);
- displacing (s403) the bushing (230) and the bearing configuration (220) together with the rotor (250) in a second axial direction, opposite to the first axial direction, by means of rotation of the bushing (230) resulting from malfunction of the bearing configuration (220) and by means of creating increased distance between the rotor (250) and stator (260) caused by the distancing arrangement, which increased distance is sufficient to reduce detectability of angular positions of the shaft (210), as detected by the rotary encoder (100), to a level below a predetermined threshold.

2. The method according to claim 1, comprising the step of:
- displacing (s430) the bushing (230) and the bearing configuration (220) together with the rotor (250) in the second axial direction a distance adapted to a detection method of the rotary encoder (200).

3. The method according to claim 1 or 2, comprising the steps of:
- generating (s440) an alarm signal when a reduced detectability of angular positions of the shaft (210), as detected by the rotary encoder (100), to a level below a predetermined threshold is at hand; and/or
- automatically interrupting (s450) operation of an assembly (100) connected to the rotary encoder (200) when a reduced detectability of angular positions of the shaft (210), as detected by the rotary encoder (100), to a level below a predetermined threshold is at hand.

4. The method according to any one of the claims 1-3, comprising the steps of:
- generating an alarm signal when an interrupted detection of angular positions of the shaft/rotor, as detected by the rotary encoder, is at hand; and/or
- automatically interrupting operation of an assembly connected to the rotary encoder when an interrupted detection of angular positions of the shaft/rotor, as detected by the rotary encoder, is at hand.

5. The method according to any one of the claims 1-4, comprising the step of:
- providing (s410) at least one recess (245a, 245b) to the bushing (230), each one of the recesses (245a, 245b) being arranged to receive a respective pin (240a, 240b).

6. A rotary encoder (200) comprising means (250, 260; 201; 202; 500) for detecting malfunction of a bearing configuration of the rotary encoder (200), the rotary encoder (200) comprising a rotor (250), a stator (260) and a shaft (210) having a bearing configuration (220), the rotary encoder (200) further comprising:
- an axial bushing (230) internally connected to the bearing configuration (220) and rotatably arranged in a housing (280) of the rotary encoder (200);
- spring means (270) being arranged for pre-stressing the bushing (230) and the bearing configuration (220) in a first axial direction;
- a distancing arrangement being arranged to change an axial distance between the rotor (250) and the stator (260), wherein the bushing (230) and the bearing configuration (220) together with the rotor (250) are arranged to be displaced in a second axial direction, opposite to the first axial direction, by means of rotation of the bushing (230) resulting from malfunction of the bearing configuration (220) and by means of creating increased distance between the rotor (250) and stator (260), which increased distance is sufficient to reduce detectability of angular positions of the shaft (210), as detected by the rotary encoder (100), to a level below a predetermined threshold.

7. The rotary encoder (200) according to claim 6, comprising:
- means (245a; 245b; 240a,240b) being arranged for displacing the bushing (230) and the bearing configuration (220) together with the rotor (250) in the second axial direction a distance adapted to a detection method of the rotary encoder (200).

8. The rotary encoder (200) according to claim 6 or 7, comprising:
- means (201; 202; 500) being arranged for generating an alarm signal when a reduced detectability of angular positions of the shaft (210), as detected by the rotary encoder (100), to a level below a predetermined threshold is at hand; and/or
- means (201; 202; 500) being arranged for automatically interrupting operation of an assembly (100) connected to the rotary encoder (200) when a reduced detectability of angular positions of the shaft (210), as detected by the rotary encoder (100), to a level below a predetermined threshold is at hand.

9. The rotary encoder (200) according to any one of the claims 6-8, comprising:
- means (201; 202; 500) being arranged for generating an alarm signal when an interrupted detection of angular positions of the shaft (210), as detected by the rotary encoder, is at hand;and/or
- means (201; 202; 500) being arranged for automatically interrupting operation of an assembly connected to the rotary encoder when an interrupted detection of angular positions of the shaft (210), as detected by the rotary encoder, is at hand.

10. The rotary encoder (200) according to any one of the claims 6-9, the rotary encoder (200) comprising more than one recess (245a, 245b) of the bushing (230), each one of the recesses (245a, 245b) being arranged to receive a respective pin (240a, 240b).

11. An assembly (100) comprising the rotary encoder (200) according to any one of the claims 6-10.

12. A computer program product comprising instructions which, when the program is executed by a computer (201; 202; 500), cause the computer (201; 202; 500) to carry out the method steps according to anyone of claims 1-5 using means of the rotary encoder according to anyone of claims 6-10.

13. A computer-readable storage medium comprising instructions which, when executed by a computer (201; 202; 500), cause the computer (201; 202; 500) to carry out the method steps according to anyone of claims 1-5 using the means of the rotary encoder according to anyone of claims 6-10.

## Patentansprüche

1. Verfahren zur Bestimmung einer Fehlfunktion eines Drehgebers (200), die durch eine Fehlfunktion seiner Lagerkonfiguration verursacht wird, wobei der Drehgeber (200) einen Rotor (250), einen Stator (260) und eine Welle (210) mit einer Lagerkonfiguration (220) umfasst, wobei das Verfahren die folgenden Schritte umfasst:
- Bereitstellen (s401) einer Axialbuchse (230), die intern mit der Lagerkonfiguration (220) verbunden und drehbar in einem Gehäuse (280) des Drehgebers angeordnet ist, wobei der Drehgeber (200) eine Abstandsanordnung umfasst, die so angeordnet ist, dass sie einen axialen Abstand zwischen dem Rotor (250) und dem Stator (260) ändert;
- Vorspannen (s402) der Buchse (230) und der Lagerkonfiguration (220) in einer ersten axialen Richtung mit Hilfe eines Federelements (270);
- Verschieben (s403) der Buchse (230) und der Lagerkonfiguration (220) zusammen mit dem Rotor (250) in einer zweiten axialen Richtung, die der ersten axialen Richtung entgegengesetzt ist, mittels Drehung der Buchse (230), die aus einer Fehlfunktion der Lagerkonfiguration (220) resultiert, und mittels Erzeugen eines vergrößerten Abstands zwischen dem Rotor (250) und dem Stator (260), der durch die Abstandsanordnung verursacht wird, wobei der vergrößerte Abstand ausreicht, um die Erfassbarkeit von Winkelpositionen der Welle (210), wie von dem Drehgeber (100) erfasst, auf ein Niveau unterhalb eines vorbestimmten Schwellenwertes zu reduzieren.

2. Verfahren nach Anspruch 1, ferner umfassend den folgenden Schritt:
- Verschieben (s430) der Buchse (230) und der Lagerkonfiguration (220) zusammen mit dem Rotor (250) in der zweiten axialen Richtung um einen Abstand, der an ein Erfassungsverfahren des Drehgebers (200) angepasst ist.

3. Verfahren nach Anspruch 1 oder 2, ferner umfassend die folgenden Schritte:
- Erzeugen (s440) eines Alarmsignals, wenn eine verringerte Erfassbarkeit von Winkelpositionen der Welle (210), wie von dem Drehgeber (100) erfasst, auf ein Niveau unterhalb eines vorbestimmten Schwellenwertes vorliegt; und/oder
- automatisches Unterbrechen (s450) des Betriebs einer mit dem Drehgeber (200) verbundenen Baugruppe (100), wenn eine verringerte Erfassbarkeit von Winkelpositionen der Welle (210), wie von dem Drehgeber (100) erfasst, auf ein Niveau unterhalb eines vorbestimmten Schwellenwertes vorliegt.

4. Verfahren nach einem der Ansprüche 1-3, ferner umfassend die folgenden Schritte:
- Erzeugen eines Alarmsignals, wenn eine unterbrochene Erfassung von Winkelpositionen der Welle/des Rotors, wie von dem Drehgeber erfasst, vorliegt; und/oder
- automatisches Unterbrechen des Betriebs einer mit dem Drehgeber verbundenen Baugruppe, wenn eine unterbrochene Erfassung von Winkelpositionen der Welle/des Rotors, wie von dem Drehgeber erfasst, vorliegt.

5. Verfahren nach einem der Ansprüche 1-4, ferner umfassend den folgenden Schritt:
- Versehen (s410) der Buchse (230) mit mindestens einer Aussparung (245a, 245b), wobei jede der Aussparungen (245a, 245b) so angeordnet ist, dass sie einen entsprechenden Stift (240a, 240b) aufnehmen kann.

6. Drehgeber (200), umfassend Mittel (250, 260; 201; 202; 500) zum Erfassen einer Fehlfunktion einer Lagerkonfiguration des Drehgebers (200), wobei der Drehgeber (200) einen Rotor (250), einen Stator (260) und eine Welle (210) mit einer Lagerkonfiguration (220) umfasst, wobei der Drehgeber (200) ferner Folgendes umfasst:
- eine Axialbuchse (230), die intern mit der Lagerkonfiguration (220) verbunden und drehbar in einem Gehäuse (280) des Drehgebers (200) angeordnet ist;
- Federmittel (270), die zum Vorspannen der Buchse (230) und der Lagerkonfiguration (220) in einer ersten axialen Richtung angeordnet sind;
- eine Distanzierungsanordnung, die so angeordnet ist, dass sie einen axialen Abstand zwischen dem Rotor (250) und dem Stator (260) verändert, wobei die Buchse (230) und die Lagerkonfiguration (220) zusammen mit dem Rotor (250) so angeordnet sind, dass sie in einer zweiten axialen Richtung, die der ersten axialen Richtung entgegengesetzt ist, verschoben werden, und zwar mittels einer Drehung der Buchse (230), die aus einer Fehlfunktion der Lagerkonfiguration (220) resultiert, und mittels des Erzeugens eines vergrößerten Abstands zwischen dem Rotor (250) und dem Stator (260), wobei der vergrößerte Abstand ausreicht, um die Erfassbarkeit von Winkelpositionen der Welle (210), wie von dem Drehgeber (100) erfasst, auf ein Niveau unterhalb eines vorbestimmten Schwellenwertes zu verringern.

7. Drehgeber (200) nach Anspruch 6, umfassend:
- Mittel (245a; 245b; 240a, 240b), die so angeordnet sind, dass sie die Buchse (230) und die Lagerkonfiguration (220) zusammen mit dem Rotor (250) in der zweiten axialen Richtung um einen Abstand verschieben, der an ein Erfassungsverfahren des Drehgebers (200) angepasst ist.

8. Drehgeber (200) nach Anspruch 6 oder 7, umfassend:
- Mittel (201; 202; 500), die so angeordnet sind, dass sie ein Alarmsignal erzeugen, wenn eine verringerte Erfassbarkeit von Winkelpositionen der Welle (210), wie von dem Drehgeber (100) erfasst, auf ein Niveau unterhalb eines vorbestimmten Schwellenwertes vorliegt; und/oder
- Mittel (201; 202; 500), die so angeordnet sind, dass sie den Betrieb einer mit dem Drehgeber (200) verbundenen Baugruppe (100) automatisch unterbrechen, wenn eine verringerte Erfassbarkeit von Winkelpositionen der Welle (210), wie von dem Drehgeber (100) erfasst, auf ein Niveau unterhalb eines vorbestimmten Schwellenwertes vorliegt.

9. Drehgeber (200) nach einem der Ansprüche 6-8, umfassend:
- Mittel (201; 202; 500), die so angeordnet sind, dass sie ein Alarmsignal erzeugen, wenn eine unterbrochene Erfassung von Winkelpositionen der Welle (210), wie von dem Drehgeber erfasst, vorliegt; und/oder
- Mittel (201; 202; 500), die so angeordnet sind, dass sie den Betrieb einer mit dem Drehgeber verbundenen Baugruppe automatisch unterbrechen, wenn eine unterbrochene Erfassung von Winkelpositionen der Welle (210), wie von dem Drehgeber erfasst, vorliegt.

10. Drehgeber (200) nach einem der Ansprüche 6-9, wobei der Drehgeber (200) mehr als eine Aussparung (245a, 245b) der Buchse (230) umfasst, wobei jede der Aussparungen (245a, 245b) so angeordnet ist, dass sie einen jeweiligen Stift (240a, 240b) aufnehmen kann.

11. Baugruppe (100), umfassend den Drehgeber (200) nach einem der Ansprüche 6-10.

12. Computerprogrammprodukt, umfassend Anweisungen, die, wenn das Programm von einem Computer (201; 202; 500) ausgeführt wird, den Computer (201; 202; 500) dazu veranlassen, die Verfahrensschritte nach einem der Ansprüche 1-5 unter Verwendung der Mittel des Drehgebers nach einem der Ansprüche 6-10 auszuführen.

13. Computerlesbares Speichermedium, umfassend Anweisungen, die, wenn sie von einem Computer (201; 202; 500) ausgeführt werden, den Computer (201; 202; 500) dazu veranlassen, die Verfahrensschritte nach einem der Ansprüche 1-5 unter Verwendung der Mittel des Drehgebers nach einem der Ansprüche 6-10 auszuführen.

## Revendications

1. Procédé pour déterminer un défaut de fonctionnement d'un codeur rotatif (200) causé par un défaut de fonctionnement de sa configuration de palier, le codeur rotatif (200) comprenant un rotor (250), un stator (260) et un arbre (210) ayant une configuration de palier (220), le procédé comprenant les étapes de :
- fournir (s401) une douille axiale (230) reliée intérieurement à la configuration de palier (220) et agencée de manière rotative dans un logement (280) du codeur rotatif, le codeur rotatif (200) comprenant un agencement d'écartement étant agencé pour changer une distance axiale entre le rotor (250) et le stator (260) ;
- précontraindre (s402) la douille (230) et la configuration de palier (220) dans une première direction axiale au moyen d'un élément de ressort (270) ;
- déplacer (s403) la douille (230) et la configuration de palier (220) conjointement avec le rotor (250) dans une deuxième direction axiale, opposée à la première direction axiale, au moyen d'une rotation de la douille (230) résultant d'un défaut de fonctionnement de la configuration de palier (220) et au moyen de la création d'une distance accrue entre le rotor (250) et le stator (260) causée par l'agencement d'écartement, ladite distance accrue étant suffisante pour réduire la détectabilité de positions angulaires de l'arbre (210), comme détecté par le codeur rotatif (100), à un niveau inférieur à un seuil prédéterminé.

2. Procédé selon la revendication 1, comprenant l'étape consistant à :
- déplacer (s430) la douille (230) et la configuration de palier (220) conjointement avec le rotor (250) dans la deuxième direction axiale sur une distance adaptée à une procédé de détection du codeur rotatif (200).

3. Procédé selon la revendication 1 ou 2, comprenant les étapes consistant à :
- générer (s440) un signal d'alarme lorsqu'une détectabilité réduite de positions angulaires de l'arbre (210), telle que détectée par le codeur rotatif (100), à un niveau inférieur à un seuil prédéterminé est à portée de main ; et / ou
- interrompre automatiquement (s450) le fonctionnement d'un ensemble (100) relié au codeur rotatif (200) lorsqu'une détectabilité réduite de positions angulaires de l'arbre (210), telle que détectée par le codeur rotatif (100), à un niveau inférieur à un seuil prédéterminé est à portée de main.

4. Procédé selon l'une quelconque des revendications 1 à 3, comprenant les étapes consistant à :
- générer un signal d'alarme lorsqu'une détection interrompue de positions angulaires de l'arbre / du rotor, telle que détectée par le codeur rotatif, est à portée de main ; et / ou
- interrompre automatiquement le fonctionnement d'un ensemble relié au codeur rotatif lorsqu'une détection interrompue de positions angulaires de l'arbre / du rotor, telle que détectée par le codeur rotatif, est à portée de main.

5. Procédé selon l'une quelconque des revendications 1 à 4, comprenant l'étape consistant à :
- fournir (s410) au moins un évidement (245a, 245b) à la douille (230), chacun des évidements (245a, 245b) étant agencé pour recevoir une broche respective (240a, 240b).

6. Codeur rotatif (200) comprenant des moyens (250, 260; 201; 202; 500) pour détecter un défaut de fonctionnement d'une configuration de palier du codeur rotatif (200), le codeur rotatif (200) comprenant un rotor (250), un stator (260) et un arbre (210) ayant une configuration de palier (220), le codeur rotatif (200) comprenant en outre :
- une douille axiale (230) reliée intérieurement à la configuration de palier (220) et disposée de manière rotative dans un logement (280) du codeur rotatif (200) ;
- des moyens de ressort (270) étant agencés pour précontraindre la douille (230) et la configuration de palier (220) dans une première direction axiale ;
- un agencement d'écartement étant agencé pour modifier une distance axiale entre le rotor (250) et le stator (260), la douille (230) et la configuration de palier (220) conjointement avec le rotor (250) étant agencés pour être déplacés dans une deuxième direction axiale, opposée à la première direction axiale, au moyen d'une rotation de la douille (230) résultant d'un défaut de fonctionnement de la configuration de palier (220) et au moyen de la création d'une distance accrue entre le rotor (250) et le stator (260), ladite distance accrue étant suffisante pour réduire la détectabilité de positions angulaires de l'arbre (210), telle que détectée par le codeur rotatif (100), à un niveau inférieur à un seuil prédéterminé.

7. Codeur rotatif (200) selon la revendication 6, comprenant :
- des moyens (245a; 245b; 240a, 240b) étant agencés pour déplacer la douille (230) et la configuration de palier (220) conjointement avec le rotor (250) dans la deuxième direction axiale sur une distance adaptée à une procédé de détection du codeur rotatif (200).

8. Codeur rotatif (200) selon la revendication 6 ou 7, comprenant :
- des moyens (201; 202; 500) étant agencés pour générer un signal d'alarme lorsqu'une détectabilité réduite de positions angulaires de l'arbre (210), telle que détectée par le codeur rotatif (100), à un niveau inférieur à un seuil prédéterminé est à portée de main ; et / ou
- des moyens (201; 202; 500) étant agencés pour interrompre automatiquement le fonctionnement d'un ensemble (100) relié au codeur rotatif (200) lorsqu'une détectabilité réduite de positions angulaires de l'arbre (210), telle que détectée par le codeur rotatif (100), à un niveau inférieur à un seuil prédéterminé est à portée de main.

9. Codeur rotatif (200) selon l'une quelconque des revendications 6 à 8, comprenant
- des moyens (201; 202; 500) étant agencés pour générer un signal d'alarme lorsqu'une détection interrompue de positions angulaires de l'arbre (210), telle que détectée par le codeur rotatif, est à portée de main ; et / ou
- des moyens (201; 202; 500) étant agencés pour interrompre automatiquement le fonctionnement d'un ensemble relié au codeur rotatif lorsqu'une détection interrompue de positions angulaires de l'arbre (210), telle que détectée par le codeur rotatif, est à portée de main.

10. Codeur rotatif (200) selon l'une quelconque des revendications 6 à 9, le codeur rotatif (200) comprenant plus d'un évidement (245a, 245b) de la douille (230), chacun des évidements (245a, 245b) étant agencé pour recevoir une broche respective (240a, 240b).

11. Ensemble (100) comprenant le codeur rotatif (200) selon l'une quelconque des revendications 6 à 10.

12. Produit de programme informatique comprenant des instructions qui, lorsque le programme est exécuté par un ordinateur (201; 202; 500), amènent l'ordinateur (201; 202; 500) à effectuer les étapes du procédé selon l'une quelconque des revendications 1 à 5 en utilisant des moyens du codeur rotatif selon l'une quelconque des revendications 6 à 10.

13. Support de stockage lisible par ordinateur comprenant des instructions qui, lorsqu'elles sont exécutées sur un ordinateur (201; 202; 500), amènent l'ordinateur (201; 202; 500) à effectuer les étapes du procédé selon l'une quelconque des revendications 1 à 5 en utilisant les moyens du codeur rotatif selon l'une quelconque des revendications 6 à 10.
